# EUROPEAN PATENT APPLICATION

(11) **EP 4 521 605 A1**
(43) Date of publication of application: **12.03.2025**
(21) Application number: 24198319.6
(22) Date of filing: 04.09.2024
(51) Int. Cl.: H02K 1/278, B25J 9/12, H02K 7/116, H02K 29/03, H02K 7/14

(54) **ACTUATOR**

(30) Priority: 11.09.2023 JP 2023146731
(71) Applicant: Sumitomo Heavy Industries, Ltd., Tokyo 141-6025 (JP)
(72) Inventor: MORITANI, Koji, Kanagawa, 237-8555, (JP)
(74) Representative: Louis Pöhlau Lohrentz

(57) **Abstract**

An object of the present invention is to provide an actuator (100) capable of improving overall backdrivability including a motor (40). An actuator (100) includes: a motor (40); and a speed reducer (10) that reduces rotation of the motor (40), in which the speed reducer (10) has an efficiency of 60% or more, and the actuator (100) includes a control unit (80) that performs control to suppress a cogging torque of the motor (40).

## Description

### BACKGROUND OF THE INVENTION

### Field of the Invention

The present invention relates to an actuator.

### Description of Related Art

An actuator that combines a motor and a speed reducer is known. The present applicant discloses a joint of a robot in which an actuator having a motor and a speed reducer is incorporated, in Japanese Unexamined Patent Publication No. 2021-030344. In this document, an actuator capable of coping with an external force without depending on an external force sensor is disclosed from knowledge about an influence of a reduction ratio of a speed reducer on a transmission efficiency of the speed reducer.

### SUMMARY OF THE INVENTION

When an external force is applied from an arm to a joint of a robot by direct teaching or the like, the actuator of the joint is backdriven. In order to control the actuator with high accuracy, it is important to reduce friction caused by power transmission and to improve backdrivability.

From this viewpoint, the technology described in Japanese Unexamined Patent Publication No. 2021-030344 has room for improvement in terms of improving the backdrivability of the actuator as a whole, including a motor.

The present invention has been made in view of such a problem, and an object of the present invention is to provide an actuator capable of improving overall backdrivability including a motor.

In order to solve the above problem, an actuator according to an aspect of the present invention includes: a motor; and a speed reducer that reduces rotation of the motor, in which the speed reducer has an efficiency of 60% or more, and the actuator includes a control unit that performs control to suppress a cogging torque of the motor.

Note that, any combinations of the above components, and those obtained by substituting the components or expressions in the present invention with each other between methods, systems, or the like are also effective as an aspect of the present invention.

According to the present invention, it is possible to provide an actuator capable of improving overall backdrivability including a motor.

### BRIEF DESCRIPTION OF THE DRAWINGS

Fig. 1 is a view schematically showing an actuator of an embodiment.
Fig. 2 is a side sectional view of a speed reducer of Fig. 1.
Fig. 3 is a front sectional view of the speed reducer of Fig. 1.
Fig. 4 is an explanatory view of a contact point locus.
Fig. 5 is a front sectional view showing a first example of a motor.
Fig. 6 is a diagram showing combinations of the number of magnetic poles of a rotor and the number of slots of a stator core.
Fig. 7 is a diagram showing the combinations of the number of magnetic poles and the number of slots.
Fig. 8 is a front sectional view showing a motor having a split core type stator core.
Fig. 9 is a front sectional view showing a motor having an integral core type stator core.
Fig. 10 is a view showing machined surfaces of the split core type stator core.
Fig. 11 is an enlarged view showing a magnet disposition surface of a rotor core.
Fig. 12 is a block diagram showing an example of a control configuration of the actuator.
Fig. 13 is a diagram showing a backdrive resistance of an actuator.
Fig. 14 is another diagram showing a backdrive resistance of an actuator.

### DETAILED DESCRIPTION OF THE INVENTION

A background that led to a conception of an actuator of the present embodiment will be described first. As described above, an actuator is backdriven by an external force applied to an output shaft. In order to control the actuator with high accuracy, it is important to reduce a resistance to backdrive (backdrive resistance) and to improve backdrivability. The backdrivability of the actuator can be said to be movability of the output shaft of the actuator when an external force is applied to the output shaft and an ease with which the external force is transmitted to an input side of the actuator.

From these, the present inventor has studied backdrive resistance of an actuator having a motor and a speed reducer, and has obtained the following knowledge.

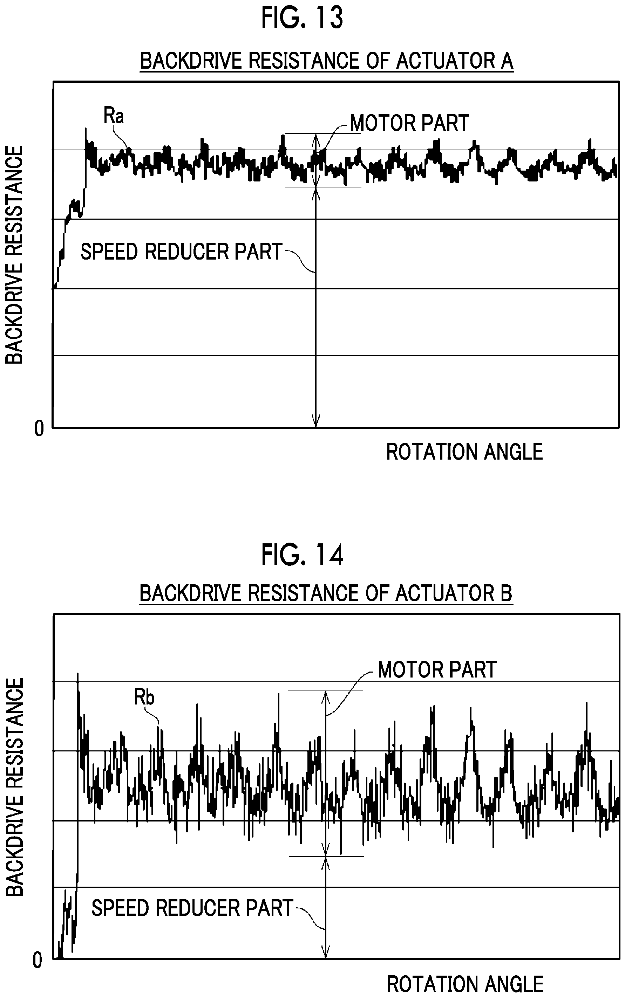

Fig. 13 is a diagram showing a backdrive resistance Ra of an actuator in the related art (hereinafter, referred to as an "actuator A"). This diagram shows the backdrive resistance Ra with respect to a rotation angle (horizontal axis) of an output shaft of the actuator A. As a result of an examination, the backdrive resistance of the actuator A can be divided into a backdrive resistance of a speed reducer part and a backdrive resistance of a motor part, and in an example of Fig. 13, it is found that the backdrive resistance of the speed reducer part is dominant. This is because friction in a transmission path of the speed reducer is large and results in a poor efficiency.

From these, the present inventor has invented a speed reducer which achieves a reduction in friction in a transmission path and an increase in efficiency. Fig. 14 shows a backdrive resistance Rb with respect to a rotation angle (horizontal axis) of an output shaft in an actuator (hereinafter, referred to as "actuator B") in which a speed reducer with an increased efficiency is combined with the motor of the actuator in the related art. A vertical axis of Fig. 14 has a larger scale than a vertical axis of Fig. 13. As shown in Fig. 14, the actuator B having the speed reducer with an increased efficiency has a reduced backdrive resistance of a speed reducer part, and is relatively strongly affected by a backdrive resistance of a motor part, resulting in an unbalanced overall backdrivability. In other words, it can be said that the actuator B has room for improvement in terms of improving the overall backdrivability including the motor.

It has been found that the actuator B has the unbalanced overall backdrivability due to an influence of a cogging torque of the motor. That is, the backdrive resistance of the motor due to the cogging torque is amplified by a reduction ratio of the speed reducer (= input rotating speed / output rotating speed, for example, 50) and affects the output shaft. In the actuator A of the related art, the backdrive resistance of the speed reducer part is large. Therefore, an influence of the backdrive resistance of the motor has been ignored. Contrary to this, the present inventor has conceived a new knowledge that in the actuator B adopting the speed reducer with an increased efficiency, the influence of the backdrive resistance of the motor is increased in terms of balance, and has focused on reducing the influence.

Based on these considerations, the present inventor has conceived an idea of combining a motor with a reduced cogging torque with the high-efficiency speed reducer in order to improve the overall backdrivability including the motor. In particular, it has been found that the overall backdrivability including the motor is significantly improved by combining a motor of which a cogging torque is suppressed by control of a control unit with a speed reducer having an efficiency of 60% or more. In addition, it has been found that by adopting a low-cogging motor in which a multiplication of a cogging torque and a reduction ratio (a result obtained by multiplying the cogging torque by the reduction ratio) is equal to or less than an output starting torque of a speed reducer in order to reduce the cogging torque in a non-controlled manner, the overall backdrivability including the motor can be further improved. Hereinafter, a specific description will be given with reference to the embodiment.

Hereinafter, the present invention will be described with reference to the drawings based on a preferred embodiment. In the embodiment and modification examples, the same or equivalent components and members will be denoted by the same reference numerals and repetitive description will be omitted as appropriate. In addition, dimensions of the members in each drawing have been enlarged and reduced as appropriate for easy understanding. Moreover, in each drawing, some of the members not important for the description of the embodiment are not shown.

In addition, although terms including ordinal numbers such as "first" and "second" will be used to describe various components, the terms will be used only for the purpose of distinguishing one component from the other component and no component is limited by the terms.

The terms in the present specification are defined.
(1) An efficiency of a speed reducer refers to a ratio of an output torque to an input torque, and can be calculated by Equation 1.
   Speed reducer efficiency (%) = (output torque) / (input torque × reduction ratio of speed reducer) × 100%... (Equation 1)
(2) An operation ratio of an actuator means a ratio of an operation time TJ of the actuator to an operation time TR of a host machine (for example, a cooperative robot or a service robot) in which the actuator is incorporated, and is represented by (TJ/TR) × 100 [% ED]. The operation time TR of the host machine itself can be defined as a time during which a power supply of the host machine is turned on, or in a case of a robot, a time during which a power supply of a drive source (servo motor) that drives each joint of the robot is turned on. Therefore, a waiting time during which the host machine performs work on a workpiece and waits for the next workpiece to be set is also included in the operation time TR of the host machine itself. In addition, the operation time TJ of the actuator (speed reducer) can be defined as a time during which the speed reducer for which the operation ratio is calculated is driven, or a time during which a drive source (servo motor) that drives the speed reducer is rotated (rotation-controlled) .
(3) An output starting torque of the speed reducer refers to a torque required to start the speed reducer from an output side in a no-load state. That is, when a torque equal to or higher than the output starting torque acts on an output shaft of the speed reducer, in a case where an input shaft of the speed reducer is set to a no-load state, the input shaft rotates at an increased speed.
(4) The reduction ratio of the speed reducer refers to a value obtained by dividing an input rotating speed by an output rotating speed. That is, the speed reducer outputs the input rotating speed reduced to "1/ reduction ratio". For example, a reduction ratio in a case where the input rotating speed is reduced to "1/3" is "3".
(5) A cogging torque of a motor is felt as a jerky resistance even when a current does not flow (due to an action of an iron core and a permanent magnet, which are components of the motor). For the cogging torque, a torque is measured while rotating the output shaft of the motor at a low speed (for example, 0.5 to 5 r/min) using an external drive, a graph of a variation in the torque is plotted, and the cogging torque is obtained from a width of a peak value from 0, or a width of a peak value from the peak value. For the measurement, for example, "TS-8700 Torque Station Pro" manufactured by Ono Sokki Co., Ltd. can be used. In a case where the torque is measured by rotating an output shaft of the actuator at a low speed using an external drive, rather than the motor alone, as shown in Fig. 14, the speed reducer part is offset and the torque variation of the motor appears. Therefore, the speed reducer part is excluded (moved in a direction toward 0), and the width of the peak value from the peak value or 1/2 of the width of the peak value from the peak value (corresponding to the width of the peak value from 0) is obtained.

In the present embodiment, it is more preferable that a multiplication of the cogging torque obtained from the width of the peak value from 0 and the reduction ratio is equal to or less than the output starting torque of the speed reducer, and a multiplication of the cogging torque obtained from the width of the peak value from the peak value and the reduction ratio is equal to or less than the output starting torque of the speed reducer.

### [Embodiment]

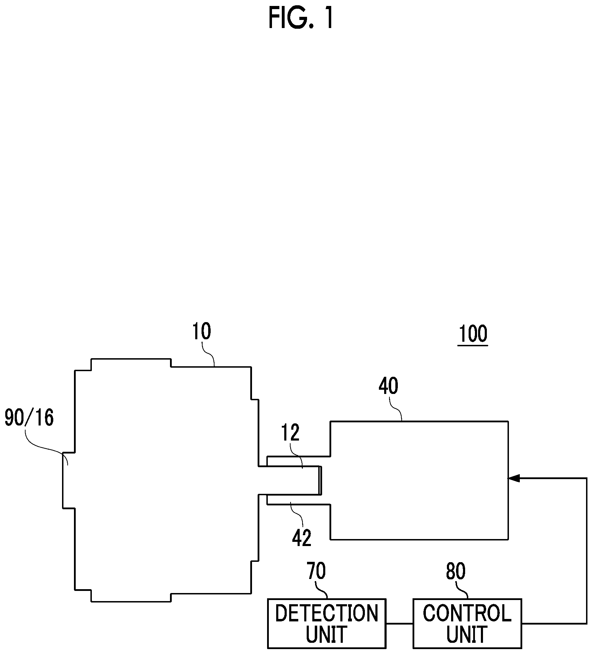

A whole configuration of an actuator 100 according to the embodiment will be described with reference to Fig. 1. Fig. 1 is a view schematically showing the actuator 100. The actuator 100 has a motor 40 and a speed reducer 10 that reduces rotation of the motor 40. An output shaft 42 of the motor 40 is connected to an input shaft 12 of the speed reducer 10 so that the rotation of the motor 40 is input. An output member 16 of the speed reducer 10 functions as an output shaft 90 of the actuator 100. The speed reducer 10 of the embodiment is a high-efficiency speed reducer having an efficiency of 60% or more. The motor 40 of the embodiment is a low-cogging motor in which a multiplication of a cogging torque and a reduction ratio is equal to or less than an output starting torque of a speed reducer. The actuator 100 of the embodiment has a detection unit 70 and a control unit 80. The control unit 80 performs control to suppress the cogging torque of the motor 40.

Hereinafter, structural contents of the speed reducer 10 and the motor 40 will be described first, and the detection unit 70 and the control unit 80 will be described later.

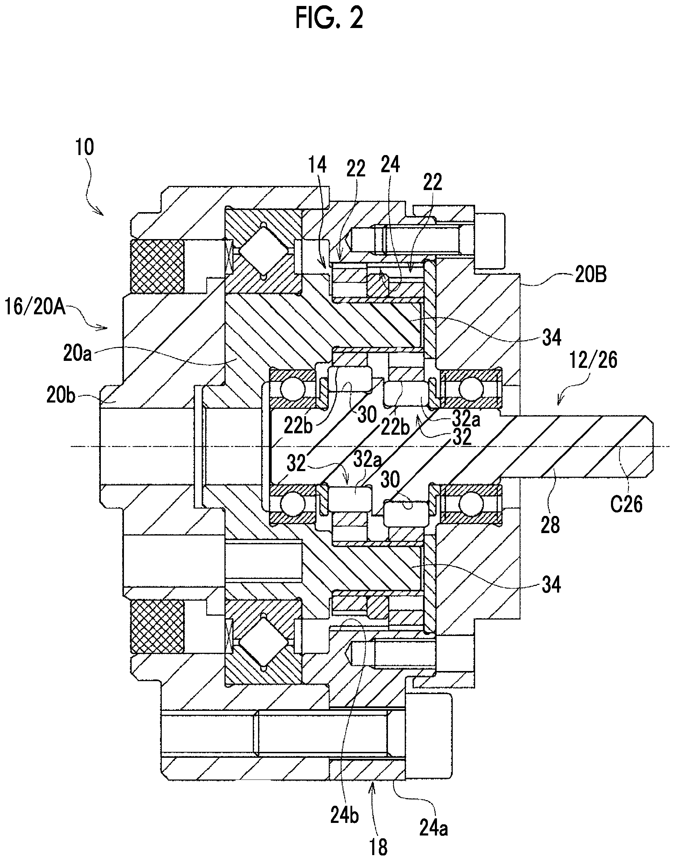

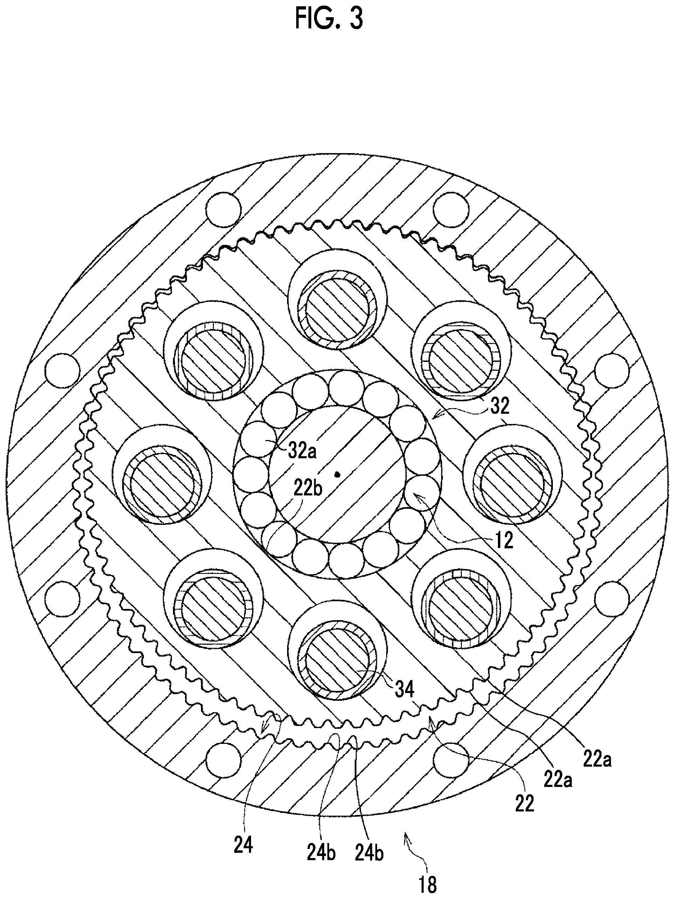

The speed reducer 10 will be described with reference to Figs. 2 and 3. The present inventor has obtained a knowledge that a reduction in friction loss in gears can increase an efficiency of a speed reducer, and the speed reducer 10 is an example of the speed reducer that has an increased efficiency based on the knowledge. The speed reducer 10 is an eccentric oscillation type gear device including an external gear 22 and an internal gear 24 that mesh with each other. The external gear 22 and the internal gear 24 constitute a gear mechanism 14. The speed reducer 10 includes the input shaft 12 to which an input rotation is input from the motor 40, the gear mechanism 14 that transmits rotation of the input shaft 12, the output member 16 that outputs an output rotation transmitted from the gear mechanism 14 to a driven device, a casing 18 that accommodates the gear mechanism 14, and carriers 20A and 20B disposed on sides of the external gear 22 in an axial direction.

The speed reducer 10 of the embodiment is an eccentric oscillation type speed reducer including the external gear 22 and the internal gear 24 as the gear mechanism 14. The speed reducer 10 can transmit the output rotation to the output member 16 by oscillating the external gear 22 with an eccentric body 30 of a crankshaft 26.

The input shaft 12 of the embodiment is the crankshaft 26. The crankshaft 26 includes a shaft body 28 and at least one (here, two) eccentric body 30 that can rotate integrally with the shaft body 28. The eccentric body 30 is eccentric with respect to a center of rotation C26 of the crankshaft 26. The shaft body 28 and the eccentric body 30 may be separate bodies or may be provided as parts of the same member.

The external gear 22 is supported via a bearing 32 to be rotatable relative to the input shaft 12. The external gear 22 includes a plurality of external teeth 22a provided on an outer peripheral portion of the external gear 22, and a through-hole 22b through which the input shaft 12 passes. The internal gear 24 includes an internal gear 24 main body 24a integrated with the casing 18 that accommodates the external gear 22, and a plurality of internal teeth 24b provided on an inner peripheral portion of the internal gear 24 main body 24a. The internal teeth 24b of the embodiment are formed directly on an inner peripheral surface of the internal gear 24 main body 24a.

The carriers 20A and 20B of the embodiment are individually disposed on both sides of the external gear 22 in the axial direction. The carriers 20A and 20B include a first carrier 20A disposed on a counter input side and a second carrier 20B disposed on an input side. In the embodiment, the first carrier 20A is configured by integrating a first carrier member 20a disposed on the input side and a second carrier member 20b disposed on the counter input side. The carriers 20A and 20B can be synchronized with an axial rotation component of the external gear 22 when the external gear 22 is oscillated by inner pins 34 passing through the external gear 22.

The bearing 32 that supports the external gear 22 includes a plurality of rolling elements 32a. The bearing 32 of the embodiment does not include a dedicated outer ring, an inner peripheral surface of the through-hole 22b of the external gear 22 also serves as the outer ring, and an outer rolling contact surface is provided on the inner peripheral surface thereof. The bearing 32 of the embodiment does not include a dedicated inner ring, an outer peripheral surface of the input shaft 12 (here, an outer peripheral surface of the eccentric body 30) also serves as the inner ring, and an inner rolling contact surface is provided on the outer peripheral surface thereof. Alternatively, the bearing 32 may include a dedicated outer ring and a dedicated inner ring, and an outer rolling contact surface and an inner rolling contact surface may be provided thereon.

An operation of the above-described speed reducer will be described. When the input shaft 12 is rotated by the input rotation input from the motor 40, the external gear 22 is oscillated by the eccentric body 30 of the crankshaft 26. When the external gear 22 is oscillated, meshing positions of the external gear 22 and the internal gear 24 sequentially change in a circumferential direction. As a result, each time the crankshaft 26 makes one rotation, one of the external gear 22 and the internal gear 24 (here, the external gear 22) rotates by a difference in the number of teeth between the two. This axial rotation component is transmitted to the output member (here, the carrier 20A via the inner pin 34), and is then output to the driven member as the output rotation.

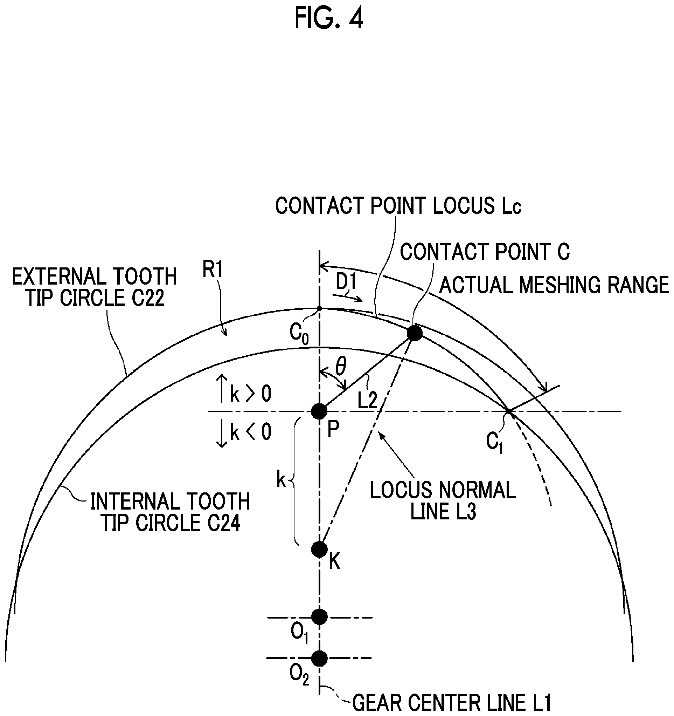

A locus of a contact point between the external gear 22 and the internal gear 24 (hereinafter, referred to as a contact point locus) will be described with reference to Fig. 4. Fig. 4 is an explanatory view of the contact point locus. Hereinafter, a radial direction with a center O₂ of the internal gear 24 as a center of a circle is simply referred to as a "radial direction". In addition, when viewed in an axial direction of the internal gear 24, a straight line passing through a center O₁ of the external gear 22 and the center O₂ of the internal gear 24 is referred to as a gear center line L1. In addition, an orthogonal coordinate system fixed with respect to the gear center line L1 is referred to as a reference coordinate system. An origin of the reference coordinate system is a gear center of any of the gears, and one coordinate axis (y-axis) thereof is the gear center line L1. The reference coordinate system in Fig. 4 is a stationary coordinate system that remains stationary even when meshing between the external gear 22 and the internal gear 24 progresses.

A tooth tip circle of the external gear 22 is referred to as an external tooth tip circle C22, and a tooth tip circle of the internal gear 24 is referred to as an internal tooth tip circle C24. The external tooth tip circle C22 refers to a circle in which tip ends of the plurality of external teeth 22a in the external gear 22 are connected, and the internal tooth tip circle C24 refers to a circle in which tip ends of the plurality of internal teeth 24b in the internal gear 24 are connected. Each of the external tooth tip circle C22 and the internal tooth tip circle C24 of the embodiment has a circular shape.

A region surrounded by the external tooth tip circle C22 and the internal tooth tip circle C24 is referred to as a meshing region R1. The meshing region R1 is formed radially inside the external tooth tip circle C22 and radially outside the internal tooth tip circle C24. The meshing between the external gear 22 and the internal gear 24 is performed within the meshing region R1. A contact position between a tooth profile curve of the external gear 22 and a tooth profile curve of the internal gear 24 that mesh with each other is referred to as a contact point C. The contact point C moves in a direction D1 (here, clockwise) as the meshing between the external gear 22 and the internal gear 24 progresses in the reference coordinate system. A locus drawn by the contact point C that moves with the progress of meshing in the reference coordinate system is referred to as a contact point locus Lc. A range in which the contact point locus Lc is present in the meshing region R1 is an actual meshing range.

A pitch point P between the external gear 22 and the internal gear 24 is an intersection point between a common normal line L2 to the two tooth profile curves at the contact point C and the gear center line L1. The pitch point P is a momentary center of relative motion between the external teeth of the external gear 22 and the internal teeth of the internal gear 24 that mesh with each other. In the case of an eccentric oscillation type speed reducer and a simple planetary speed reducer, the pitch point P is a fixed point that does not move in the progress of the meshing of the external gear 22 and the internal gear 24 in the reference coordinate system.

An intersection point between a normal line L3 (hereinafter, referred to as a locus normal line L3) to the contact point locus Lc at the contact point C and the gear center line L1 is referred to as an intersection point K, and a length from the intersection point K to the pitch point P is referred to as k. The locus normal line L3 is a straight line perpendicular to a tangent line to the contact point locus Lc at the contact point C. As shown in Fig. 4, a sign of k is set to be positive when the intersection point K is present on a side opposite to the center O₂ of the internal gear 24 with respect to the pitch point P, and is set to be negative when the intersection point K is present on a center O₂ side of the internal gear 24 with respect to the pitch point P.

In the reference coordinate system, an angle from the gear center line L1 centered on the pitch point P is referred to as an angle θ. The angle θ is positive on a side where the contact point C moves away from the gear center line L1 in the movement direction D1.

The present inventor has obtained the knowledge that the friction loss of the gears is reduced when the gear mechanism 14 (the external gear 22 and the internal gear 24) satisfies three conditions described below.
(1) The first condition is that the pitch point P is positioned radially inside each of the tooth tip circles C22 and C24.
(2) The second condition is that the intersection point K is positioned between the pitch point P and the center O₁ of the external gear 22. This second condition needs to be satisfied in the entire range of the process in which the contact point C moves along the contact point locus Lc in the meshing region R1.
(3) The third condition is that the contact point locus Lc is present within an angle range in which the angle θ is 0 to n/2 [rad] in the meshing region R1.

The third condition can be said to be a condition in which the contact point locus Lc does not protrude beyond the angle range (the angle range in which θ is less than 0 and exceeds n/2) in which the angle θ is 0 to π/2 in the meshing region R1. Fig. 4 shows an example in which the contact point locus Lc is present within an angle range from a position Co where the angle θ is 0 to a position C₁ where the angle θ is π/2 (that is, the entire angle range where the angle θ is 0 to π/2).

The speed reducer 10 of the embodiment realizes an efficiency as high as 60% or more by satisfying the above three conditions with the external gear 22 and the internal gear 24. The efficiency of the speed reducer 10 is more preferably 70% or more, and even more preferably 80% or more. The speed reducer 10 of this example realizes an efficiency of 75% to 85%.

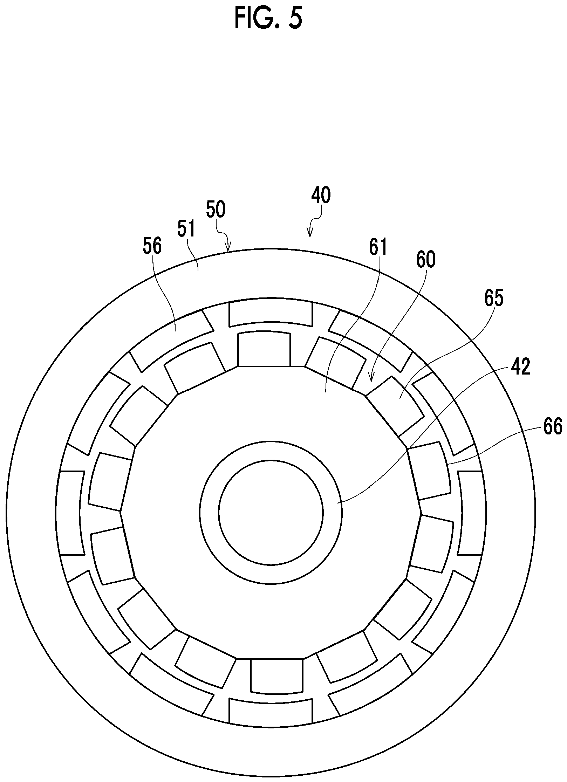

Next, a first example of the motor 40 will be described with reference to Fig. 5. Fig. 5 is a front sectional view showing the first example of the motor 40. A specific example of the low-cogging motor is not particularly limited, and may be, for example, a cored motor or a coreless motor. The first example of the motor 40 is a coreless motor. The coreless motor is also called a gap winding motor, and includes a so-called slotless structure in which a magnetic pole facing surface of a stator core has no tooth or slot, and a completely coreless structure that has no stator core. The first example of the motor 40 has a slotless structure in which an inner peripheral surface (magnetic pole facing surface) of a stator core 51 has no tooth or slot.

The motor 40 has an annular stator 50 and a rotor 60 surrounded by the stator 50. The rotor 60 is rotatably supported by the stator 50 by a predetermined bearing unit (not shown). The stator 50 has the hollow tubular stator core 51 made of a magnetic body, and a plurality of (for example, 12) armature coils 56 fixed to the inner peripheral surface of the stator core 51. The armature coil 56 is an air-core winding. The motor 40 is a three-phase motor, and coils of each phase are constituted by four armature coils 56 connected in series.

The rotor 60 has a rotor core 61 having a polygonal columnar shape and made of a magnetic body, and a plurality of (for example, 14) magnets 65 fixed to an outer peripheral surface of the rotor core 61. The magnet 65 has a field magnetic pole on a surface facing the stator core 51, and supplies a field magnetic flux to a radial gap (magnetic gap) between the stator 50 and the rotor 60. A plurality of (for example, 14) magnet disposition surfaces 62 on which the magnets 65 are disposed are provided in the circumferential direction on the outer peripheral surface of the rotor core 61, and a cross section of the rotor core 61 viewed in the axial direction is 14-sided. The cylindrical output shaft 42 is fixed to a rotation center of the rotor 60.

In the motor 40, when a 3-phase drive current is supplied to armature coils 55, the armature coils 55 generate a rotating magnetic field, which interacts with the field magnetic flux from the magnet 65 to generate a torque on the rotor 60 and the output shaft 42 to drive the input shaft 12 of the speed reducer 10.

Since the motor 40 of the first example is a coreless motor, a torque density of the motor is low. However, a magnetic resistance hardly changes when the rotor 60 rotates, and cogging due to the change in magnetic resistance hardly occurs. The motor 40 of the first example has a small output torque, but can realize the actuator 100 having practical performance by being combined with the high-efficiency speed reducer 10. The actuator 100 having the motor 40 of the first example is suitable for an application of driving a joint of a cooperative robot that can work together with a person in the same space because the backdrive resistance of the motor is small. In particular, the actuator 100 equipped with the motor 40 of the first example is suitable for an application of driving a joint of a cooperative robot having a low operation ratio (for example, an operation ratio of 20% ED or less).

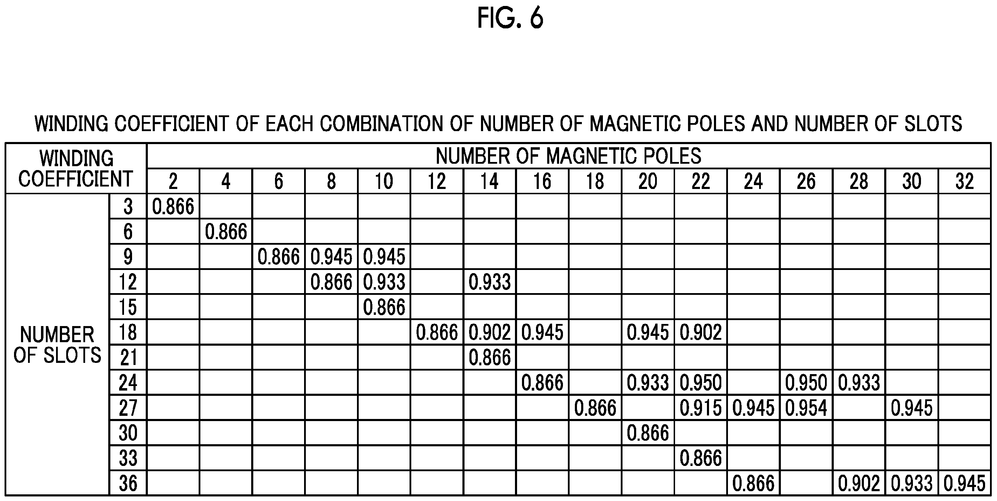

A second example of the motor 40 will be described with reference to Figs. 6 to 11. The motor 40 of the second example is a cored motor. For a cored motor, the present inventor has found that backdrivability of an actuator can be improved by combining a motor having a configuration (hereinafter, sometimes referred to as a "reduction configuration") for suppressing a cogging torque (hereinafter, sometimes simply referred to as "cogging") of an order lower than an order of a least common multiple of the number of magnetic poles and the number of slots with a high-efficiency speed reducer.

Examples of the reduction configuration include a multi-pole motor (hereinafter, referred to as a "fractional slot motor") having a fractional slot structure. The fractional slot structure refers to a structure in which the number of slots divided by a product of the number of phases and the number of poles (hereinafter, referred to as "the number of slots per pole per phase") is a fraction, and can suppress cogging of a lower order compared to a structure in which the number of slots per pole per phase is an integer. The motor 40 of the second example adopts a fractional slot motor as the reduction configuration.

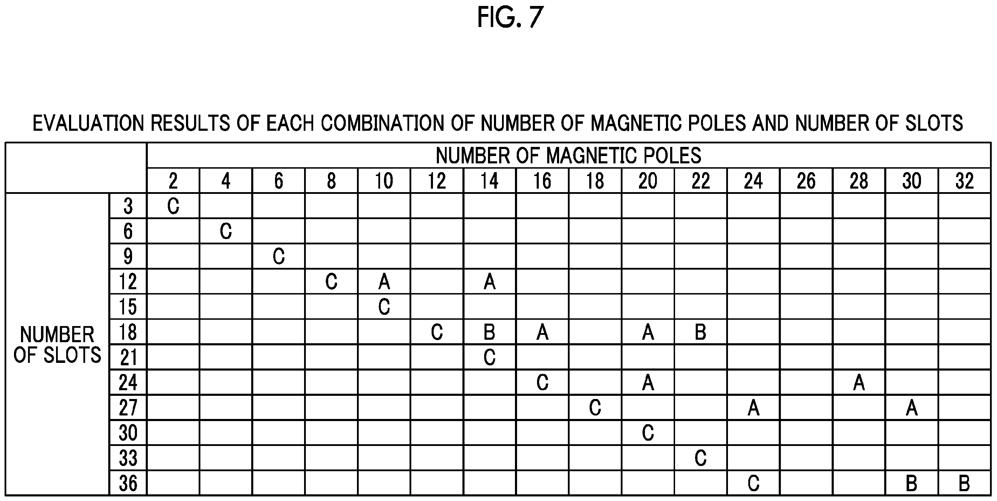

Fig. 6 is a diagram showing combinations of the number of magnetic poles P of the rotor 60 and the number of slots S of the stator core 51, and shows a winding coefficient of each combination of the number of magnetic poles P and the number of slots S. In Fig. 6, winding coefficients are entered for combinations of the number of magnetic poles P and the number of slots S that are useful for a fractional slot motor. Fig. 7 shows evaluation results by simulation using symbols for combinations of the number of magnetic poles P and the number of slots S with winding coefficients exceeding 0.9. In an evaluation, it has been found that the lower-order cogging can be suppressed in combinations (indicated by A or B in Fig. 7) in which a ratio of the number of magnetic poles P to the number of slots S (the number of magnetic poles P: the number of slots S) is 5:6, 7:6, 7:9, 8:9, 10:9, or 11:9. Among these combinations, the combination indicated by A is particularly preferable.

Specifically, the combination of the number of magnetic poles P and the number of slots S that can suppress the lower-order cogging includes the following combinations: 10 poles and 12 slots, 14 poles and 12 slots, 14 poles and 18 slots, 16 poles and 18 slots, 20 poles and 18 slots, 20 poles and 24 slots, 22 poles and 18 slots, 24 poles and 27 slots, 28 poles and 24 slots, 30 poles and 27 slots, 30 poles and 36 slots, and 32 poles and 36 slots.

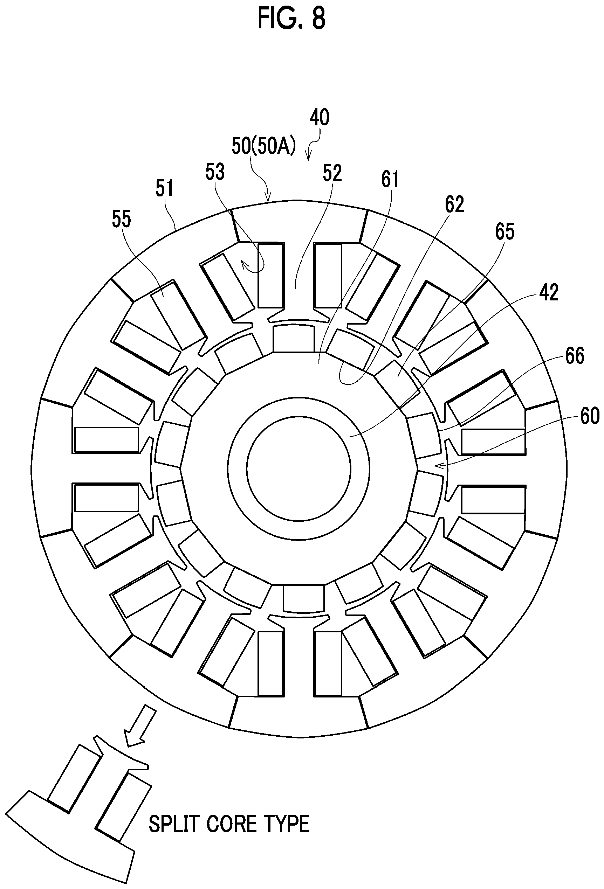

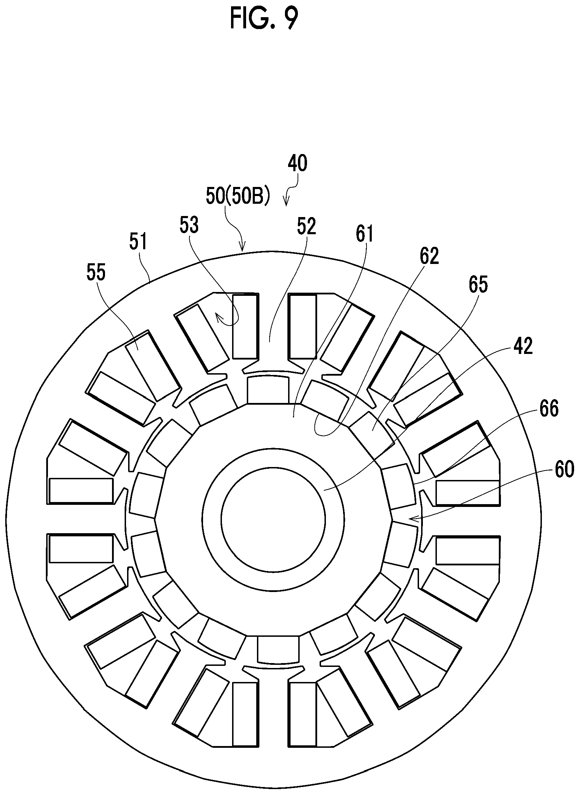

A configuration of the motor 40 of the second example will be described. Figs. 8 and 9 are front sectional views showing the configuration of the motor 40 of the second example. Fig. 8 shows an example having the stator core 51 (hereinafter, referred to as 51A for distinction) of a split core type, and Fig. 9 shows an example having the stator core 51 (hereinafter, referred to as 51B for distinction) of an integral core type. The following description is common to the integral core type and the split core type unless otherwise specified.

In the second example, the motor 40 has the annular stator 50 and the rotor 60 surrounded by the stator 50. The rotor 60 is rotatably supported by the stator 50 by a predetermined bearing unit (not shown). The stator 50 has a stator core 51 and a plurality (for example, 12) of the armature coils 55. The stator core 51 has a plurality of (for example, 12) teeth 52 provided at a predetermined interval in the circumferential direction and slots 53 provided between the teeth 52, and has an annular shape. Each armature coil 55 is mounted in the corresponding slot 53. The motor 40 is a three-phase motor, and coils of each phase are constituted by four armature coils 55 connected in series.

The rotor 60 has the rotor core 61 having a polygonal columnar shape and made of a magnetic body, and the plurality of (for example, 14) magnets 65 fixed to the outer peripheral surface of the rotor core 61. The magnet 65 has a field magnetic pole on a surface facing the stator core 51, and supplies a field magnetic flux to a radial gap (magnetic gap) between the stator 50 and the rotor 60. The plurality of (for example, 14) magnet disposition surfaces 62 on which the magnets 65 are disposed are provided in the circumferential direction on the outer peripheral surface of the rotor core 61, and a cross section of the rotor core 61 viewed in the axial direction is 14-sided. The cylindrical output shaft 42 is fixed to the rotation center of the rotor 60.

In the motor 40, when a 3-phase drive current is supplied to the armature coils 55, the armature coils 55 generate a rotating magnetic field, which interacts with the field magnetic flux from the magnet 65 to generate a torque on the rotor 60 and the output shaft 42 to drive the input shaft 12 of the speed reducer 10.

Since the motor 40 of the second example is a fractional slot motor, the lower-order cogging can be suppressed. However, in addition to a higher-order component of ideal cogging, abnormal cogging of components of the number of magnetic poles and the number of slots is generated. This abnormal cogging is generated as a multiplication of the output starting torque and the reduction ratio when the motor 40 is incorporated in the speed reducer 10. As a result of the examination, regarding the cogging of the motor 40, it has been found that a desired backdrive resistance level can be realized by suppressing the multiplication of the cogging and the reduction ratio of the speed reducer 10 to be equal to or less than the output starting torque of the speed reducer 10.

In addition, as a result of the examination, it has been found that a main cause of the component of the number of magnetic poles of the abnormal cogging is incomplete deformation of the stator core 51 with respect to a design shape due to a manufacturing error or the like, and that it is effective to secure concentricity accuracy of the stator core 51 in order to reduce the deformation.

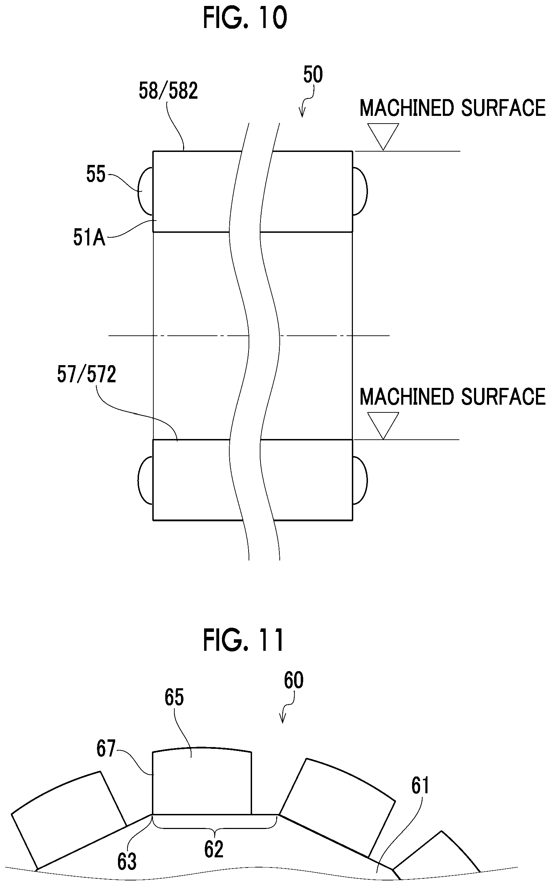

In a case where the split core type stator core 51A is adopted, in order to secure the concentricity accuracy, at least one of an inner peripheral surface 57 and an outer peripheral surface 58 of the stator core 51A may be subjected to additional machining by machining for the stator 50 after assembly. Fig. 10 is a view showing machined surfaces 572 and 582 of the stator core 51A. As shown in this figure, the inner peripheral surface 57 has the machined surface 572 subjected to the additional machining, and the outer peripheral surface 58 has the machined surface 582 subjected to the additional machining. By providing the machined surfaces 572 and 582, the concentricity accuracy of the stator core 51A can be improved. The split core type stator core 51A is highly productive because the armature coils 55 can be mounted in a split state, and a fill factor of the coils can be increased.

In addition, in order to secure the concentricity accuracy, the integral core type stator core 51B can be adopted. Since the integral core type has less deformation than the split core type, the concentricity accuracy can be easily secured.

In addition, as a result of the examination, it has been found that the abnormal cogging includes a multiple component of the number of slots and the number of magnetic poles (hereinafter, simply referred to as a "multiple component"), and that main causes of the multiple component include an imbalance of the magnetic poles, variations in magnetic forces of the magnets 65, and variations in attachment positions of the magnet 65. It has been suggested that the variations in the magnetic forces of the magnets 65 are mitigated by multipolarization. The variations in the attachment positions of the magnets 65 are responsible for the component of the number of slots and the multiple component.

Although it is conceivable to dispose the magnet 65 at a center of the magnet disposition surface 62 in the circumferential direction, the variations in the attachment positions become large due to an influence of dimensional tolerances of components of the magnets 65 or attachment accuracy during assembly. That is, since a jig that supports the magnet 65 during attachment is provided with a clearance equal to or greater than a dimensional tolerance of a width of the magnet 65 in the circumferential direction, the variations in the attachment positions of the magnets 65 are increased by the amount of the clearance. Therefore, the present inventor has devised a configuration in which the magnet 65 is disposed closer to one side in the circumferential direction of the magnet disposition surface 62 in order to reduce the variations in the attachment positions of the magnets 65.

Fig. 11 is an enlarged view of the magnet disposition surface 62 of the rotor core 61. As shown in this figure, in the embodiment, the magnet 65 is disposed closer to one side in the circumferential direction of the magnet disposition surface 62. In the example of Fig. 11, an end surface 67 of the magnet 65 is positioned at an end portion 63 on one side. The end surface 67 may be separated from the end portion 63. With this configuration, the end surface 67 on one side of the magnet 65 can be brought into contact with the jig to be positioned and is thus not affected by the clearance with the jig. Therefore, the variations in the attachment positions of the magnets 65 can be reduced.

The motor 40 of the second example configured as described above suppresses cogging including abnormal cogging. In addition, the actuator 100 having the motor 40 of the second example is suitable for the application of driving the joint of the cooperative robot because of low backdrive resistance.

Next, a technology of suppressing the cogging torque of the motor by using a control technology will be described. The present inventor has devised a technology for suppressing a backdrive resistance of an actuator having a motor and a speed reducer by using a control technology. As an application of the control technology, an improvement of characteristics by feedforward or feedback considering torque ripple and cogging characteristics is considered. Examples of the torque ripple and cogging include cogging based on a relationship between the number of magnetic poles and the number of slots of a motor, and cogging caused by a manufacturing error and the like.

Examples of cogging caused by manufacturing include cogging generated at an order of the number of slots due to the variations in the positions of the magnets and intensities of magnetic forces and cogging generated at an order of the number of poles of the rotor due to stator eccentricity or stator deformation. A cogging torque generated by these cogging includes a cogging torque of an order lower than an order of a least common multiple of the number of magnetic poles and the number of slots of the motor. Hereinafter, a specific control configuration will be described.

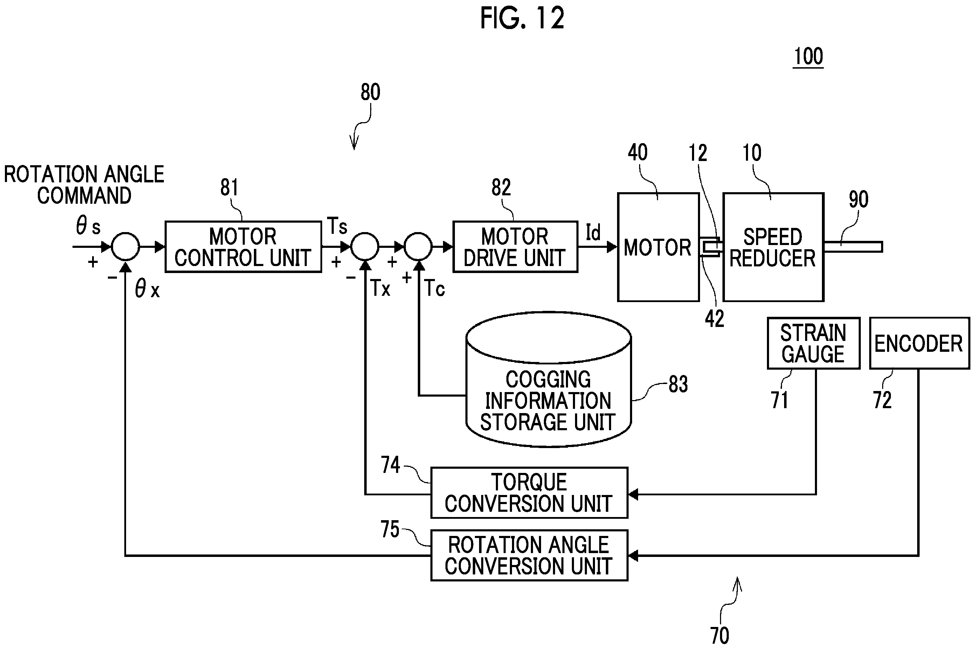

A control configuration of the actuator 100 will be described with reference to Fig. 12. Fig. 12 is a block diagram showing an example of the control configuration of the actuator 100. The actuator 100 has the detection unit 70 for detecting a force acting on the output shaft 90 of the actuator 100 and the control unit 80 for controlling the actuator 100 based on a detection result of the detection unit 70. The configuration of Fig. 12 includes control that feeds back the force acting on the output shaft 90 as a torque and control that feeds forward cogging information for canceling the cogging torque.

Although the detection unit 70 is not limited, examples thereof include a strain gauge for detecting a moment load of the output shaft 90, an encoder for detecting a rotation angle θx of the output shaft 90, and a current sensor for detecting a motor current Id. The detection unit 70 may be one or two of the strain gauge, the encoder, and the current sensor. Alternatively, for example, the detection unit 70 may be an encoder that detects the rotation of the output shaft 42 of the motor, or may detect a current command value of a motor drive unit 82. The detection unit 70 of the embodiment includes a strain gauge 71, a torque conversion unit 74, an encoder 72, and a rotation angle conversion unit 75. The strain gauge 71 detects a moment load applied to the output shaft 90. The torque conversion unit 74 converts a detection result of the strain gauge 71 into a detection torque Tx for feedback. The encoder 72 is a rotary encoder that detects the rotation of the output shaft 90. The rotation angle conversion unit 75 converts a detection result of the encoder 72 into the rotation angle θx of the output shaft 90.

The control unit 80 is not limited, but in this example, the control unit 80 includes a motor control unit 81, the motor drive unit 82, and a cogging information storage unit 83. The motor control unit 81 provides a torque command Ts for the motor 40 based on a comparison result between a rotation angle command θs and the rotation angle θx of the output shaft 90. The cogging information storage unit 83 is a storage unit that stores cogging information regarding the cogging torque of the motor 40. The motor drive unit 82 drives the motor 40 by supplying a drive current Id to the motor 40 based on a result obtained by adding cogging information Tc to a comparison result between the torque command Ts and the detection torque Tx. The motor drive unit 82 can be configured to include, for example, an inverter circuit.

The control unit 80 performs control to suppress the cogging torque based on the cogging information stored in the cogging information storage unit 83. For example, the control unit 80 can suppress the backdrive resistance caused by the cogging torque by feeding forward the cogging information to the motor drive unit 82.

As an example, the cogging information may be data for canceling the cogging torque of the motor 40 that appears on the output shaft 90 of the actuator 100. In particular, the cogging information may be data acquired in advance from a relationship between the cogging torque appearing on the output shaft 90 of the actuator 100 and a rotational position of the output shaft 90. The rotational position of the output shaft 90 can be acquired by using the encoder 72.

The cogging information may be information common to a group of the actuators 100 based on measurement data at the time of design, or may be individual information based on measurement data acquired by each of the actuators 100.

There is no limitation on a time when the cogging information is acquired and stored in the cogging information storage unit 83. For example, the cogging information may be stored before shipment of the actuator 100. Alternatively, a measurement mode for measuring the cogging torque may be mounted in the actuator 100, and the cogging information may be acquired and stored by a customer after the shipment of the actuator 100. In addition, the cogging information may be updated as necessary.

In the actuator 100 configured as described above, the rotation angle θx of the output shaft 90 is subjected to feedback-control to approach the rotation angle command θs, and the cogging information is subjected to feedforward-control to cancel the cogging torque. In particular, the control unit 80 performs control to suppress the cogging torque of an order lower than the order of the least common multiple of the number of magnetic poles P and the number of slots S of the motor 40. With this configuration, the backdrive resistance of the actuator 100 is suppressed. Each element shown in Fig. 12 is an example, and various modifications are possible.

Features of the actuator 100 configured as described above will be described. The actuator 100 is an actuator having the motor 40 and the speed reducer 10 that reduces the rotation of the motor 40, the speed reducer 10 has an efficiency of 60% or more, and the actuator 100 includes the control unit 80 that performs control to suppress the cogging torque of the motor 40.

According to this configuration, the overall backdrivability of the actuator including the motor 40 can be improved by combining the motor 40 with the reduced cogging torque with the high-efficiency speed reducer 10.

The above is a description of the embodiment.

The present invention has been described above based on the embodiment. These embodiments are merely examples, and it is understood by those skilled in the art that various modifications and changes are possible within the scope of the appended claims of the present invention, and that such modification examples and changes are also within the scope of the appended claims of the present invention. Therefore, the description and the drawings in the present specification should be regarded as illustrative, not limiting.

### (Modification Example)

Hereinafter, modification examples will be described. In the drawings and description of the modification examples, the same or equivalent components and members as the embodiment will be denoted by the same reference numerals. Description overlapping with that in the embodiment will be omitted as appropriate, and description will be made focusing on configurations different from those in the embodiment.

The type of the speed reducer is not particularly limited. For example, the speed reducer 10 may be a simple planetary speed reducer or a bending meshing type speed reducer, in addition to the eccentric oscillation type speed reducer. In the case of the eccentric oscillation type speed reducer, a specific type thereof is not particularly limited. As in the embodiment, this type may be, as well as a center crank type in which the crankshaft 26 is disposed on a center of the internal gear 24, a distributed type in which a plurality of crankshafts are disposed at positions radially offset from an axial center of the internal gear 24. In addition, in the case of the eccentric oscillation type speed reducer, in addition to the case where the external gear 22 oscillates, the internal gear 24 may oscillate. In the case of the bending meshing type speed reducer, a specific type thereof is not particularly limited. For example, the type of the bending meshing type speed reducer may be a tubular type including two internal gears 24, a cup type including one internal gear 24, or a silk hat type. In addition, the speed reducer may function as any of a reduction gear, a speed increaser, and a power transmission device (power distribution device).

In the description of the embodiment, an example has been described in which the carrier 20A of the speed reducer 10 is the output member 16 and is the output shaft 90 of the actuator 100. However, the present invention is not limited thereto. For example, a configuration may be adopted in which the casing of the speed reducer is used as the output member to transmit the output rotation to the output shaft of the actuator.

In the description of the embodiment, an example has been described in which the rotor 60 has a plurality of segment type magnets 65. However, for example, the rotor may have a ring-shaped integral magnet. In addition, the type of the motor is not particularly limited, and may be, for example, an outer rotor type or an axial gap type. The motor is not limited to a magnet motor. In addition, the motor is not necessarily required to have a multiplication of the cogging torque and the reduction ratio that is equal to or less than the output starting torque of the speed reducer, and may be a motor having a multiplication of the cogging torque and the reduction ratio that is slightly greater than the output starting torque of the speed reducer. Even with such a motor, various configurations (configurations described in claims 2 to 7, 9, and 11 of the original application) for suppressing the cogging torque described in the above embodiment are provided, thereby improving the overall backdrivability as an actuator when the motor is combined with the high-efficiency speed reducer. In the embodiment, both a method of suppressing the cogging torque by devising the structure of the motor 40 and a method of suppressing the cogging torque by control have been described. However, it is not essential to have both of the two, and at least one of the two may be provided.

Each of these modification examples exhibits the same operation and effect as those of the embodiment.

Any combination of each embodiment and the modification examples described above is also useful as an embodiment of the present invention. A new embodiment generated by the combination has the effects of each of the embodiment and the modification example combined with each other.

### Brief Description of the Reference Symbols

10: Speed reducer
40: Motor
42: Output shaft
50: Stator
51: Stator core
53: Slot
57: Inner peripheral surface
58: Outer peripheral surface
60: Rotor
61: Rotor core
62: Magnet disposition surface
65: Magnet
70: Detection unit
80: Control unit
90: Output shaft
100: Actuator

## Claims

1. An actuator (100) comprising:
a motor (40); and
a speed reducer (10) that reduces rotation of the motor (40),
wherein the speed reducer (10) has an efficiency of 60% or more, and
the actuator (100) includes a control unit (80) that performs control to suppress a cogging torque of the motor (40) .

2. The actuator (100) according to claim 1,
wherein the motor (40) is a low-cogging motor in which a multiplication of the cogging torque and a reduction ratio is equal to or less than an output starting torque of the speed reducer (10).

3. The actuator (100) according to claim 2,
wherein the motor (40) is a coreless motor.

4. The actuator (100) according to claim 3,
wherein the actuator (100) is an actuator that drives a joint of a cooperative robot having an operation ratio of 20% ED or less.

5. The actuator (100) according to claim 1,
wherein the motor (40) includes a configuration for suppressing a cogging torque of an order lower than an order of a least common multiple of the number of magnetic poles and the number of slots of the motor (40).

6. The actuator (100) according to claim 1,
wherein the motor (40) includes an integral core type stator core (51B).

7. The actuator (100) according to claim 1,
wherein the motor (40) includes a split core type stator core (51A), and
at least one of an inner peripheral surface and an outer peripheral surface of the stator core (51A) includes a machined surface.

8. The actuator (100) according to claim 1,
wherein the motor (40) includes a rotor core (61) in which a plurality of magnet disposition surfaces (62) on which magnets (65) are disposed are provided in a circumferential direction, and
the magnet (65) is disposed closer to one side in the circumferential direction of the magnet disposition surface (62) .

9. The actuator (100) according to claim 1, further comprising:
a detection unit (70) that detects a force acting on an output shaft (90) of the actuator (100),
wherein the control unit (80) controls the actuator (100) based on a detection result of the detection unit (70) .

10. The actuator (100) according to claim 1,
wherein the control unit (80) performs control to suppress a cogging torque of an order lower than an order of a least common multiple of the number of magnetic poles and the number of slots of the motor (40).

11. The actuator (100) according to claim 1, further comprising:
a storage unit (83) that stores cogging information regarding the cogging torque of the motor (40),
wherein the control unit (80) performs control to suppress the cogging torque, based on the cogging information stored in the storage unit (83).
